# EUROPEAN PATENT SPECIFICATION

(11) **EP 2 071 224 B1**
(45) Date of publication and mention of the grant of the patent: **23.10.2013**
(21) Application number: 08019902.9
(22) Date of filing: 14.11.2008
(51) Int. Cl.: F16L 55/033

(54) **Anti-noise device for faucets**
Schalldämpfungsvorrichtung für Wasserhähne
Dispositif anti-bruit pour robinets

(30) Priority: 14.12.2007 IT MI20072338
(43) Date of publication of application: 17.06.2009
(73) Proprietor: Cattaneo, Piero, 28010 Cavaglio d' Agogna (NO) (IT)
(72) Inventor: Cattaneo, Piero, 28010 Cavaglio d' Agogna (NO) (IT)
(74) Representative: Cicogna, Franco

(56) References cited:
- EP-A2- 0 846 909
- WO-A1-94/13997
- DE-A1- 4 240 323
- DE-A1- 19 648 200

## Description

### BACKGROUND OF THE INVENTION

The present invention relates to an anti-noise device for faucets in general.

As is known, the water flow through a faucet generates a water flow noise depending on the shape and length of the water passages, as well as on the speed and water amount exiting the faucet.

Accordingly, some types of faucets, such as shower and bath tub faucets are generally very noisy, since they provide comparatively high water flow rates.

To the above it is to be added that also other types of faucets, such as wash-basin, bidet, kitchen faucets and so on, which are conventionally water supplied by rigid copper tubes or flexible hoses, are also affected by said noise problems.

Typically, for coupling water faucets to corresponding tubes are conventionally used eccentric fitting elements which, in addition to providing a compensation in the mechanical coupling, usually comprise specifically designed elements to reduce the noise in the faucet.

Prior devices are practically constituted by silencers, tending to greatly reduce the faucet noise to a noise level considered as acceptable by enforcing noise rules. Such a device is known from WO 94/13997 A which corresponds to the preamble of claim 1.

In this connection it should be pointed out that the noise reducing efficiency of prior silencer devices changes depending on their types.

In particular the end results will depend on the faucet type and the fitting included therein.

Thus, some silencer devices which, in a normal condition, would be comparatively efficient, are frequently insufficient in other applications for the above mentioned reasons.

Moreover, the noise reducing results cannot be constantly achieved because of improper assemblings which, frequently, do not assure a long duration noise reduction operation.

For reducing noise in faucets is also known a rubber element, having a substantially tubular configuration, including three or more longitudinally extending ribs, preventing this element from being laterally misplaced as it is assembled to the faucet.

In particular, the above mentioned prior rubber element is held in a set position in a hole, having a constant diameter through the overall length thereof, by shaped or contoured bush elements of a preset length to be axially engaged in the faucet fitting.

However, the above mentioned prior solutions, for silencing faucet noises, are difficult to be properly assembled, in particular because of a comparatively large flexibility of rubber elements and related friction against the hole surface in the assembling operation. Thus, the above mentioned rubber element can be accidentally displaced, thereby preventing a proper radial tightness to be achieved, and consequently preventing noise from being efficiently reduced.

Further prior solutions provide to use a cylindric tubular rubber element having two tightness circular crown lips.

In assembling this latter element, the mentioned lips are pressed by a cylindric element, of spoke cage configuration, which is entrapped in and loaded by clamping the faucet body to an eccentric element.

In such a solution, the eccentric element has an inner cavity having a cross section of a central empting type.

Thus, the cylindric element can be easily engaged in the eccentric element cavity.

However, because of a variable size of the components, and of the gaskets arranged between the eccentric faucet, and because of other reasons, such as, for example, an inaccurate assembling, water frequently leaks through the assembly, thereby the latter silencing device cannot efficiently operate.

### SUMMARY OF THE INVENTION

Accordingly, the aim of the present invention is to overcome the above mentioned problems, by providing an anti-noise device for faucets in general allowing to greatly improve the operation reliability thereof, and in particular allowing to drastically eliminate all the unnecessary efforts during the engagement of the silencer in its housing cavity.

Within the scope of the above mentioned aim, a main object of the invention is to provide such a silencing device also providing an improved water flow at the inlet of the faucet, thereby consequently further improving the radial flexibility thereof.

Yet another object of the present invention is to provide such an anti-noise device which, owing to its specifically designed construction, is very reliable and safe in operation.

Yet another object of the present invention is to provide such an anti-noise device for faucets in general, which can be easily made starting from easily available elements and materials, and which, moreover, is very competitive from a mere economic standpoint.

The invention is an antinoise device according to claim 1, optional features are defined by the dependent claims.

### BRIEF DESCRIPTION OF THE DRAWINGS

Further characteristics and advantages of the present invention will become more apparent hereinafter from the following detailed disclosure of some preferred, though not exclusive, embodiments of an anti-noise device for faucets in general, according to the invention, which is illustrated, by way of an indicative, but not limitative example, in the accompanying drawings, where:
Figure 1 is a schematic top plan view of a silencer device, and being shown, in an exploded form, the silencer tubular element;
Figure 2 is a cross-sectional view substantially taken along the section line II-II of figure 1;
Figure 3 is a further exploded perspective view showing the inventive device, in which the flow guide bush elements are differently arranged;
Figure 4 is a further cross-sectional view showing an embodiment of the device shown in figure 3;
Figure 5 is yet another cross-sectional view showing a modified embodiment of the device, including a washer element instead of a bush element;
Figure 6 is yet another exploded perspective view showing a modified embodiment of the inventive device including a stiffening cage;
Figure 7 is yet another exploded view showing the embodiment shown in figure 6;
Figure 8 shows an embodiment of the inventive device analogous to that of figure 7, with a modified position of a bush element;
Figure 9 is a further cross sectional view showing an embodiment of the device analogous to that of figure 7, but using a washer instead of a bush element;
Figure 10 is yet another exploded perspective view of an embodiment of the inventive device including stiffening ring elements;
Figure 11 is a cross-sectional view of the device shown in figure 10; and
Figure 12 shows a modified embodiment of the device including a built-in conveying element therein.

### DESCRIPTION OF THE PREFERRED EMBODIMENTS

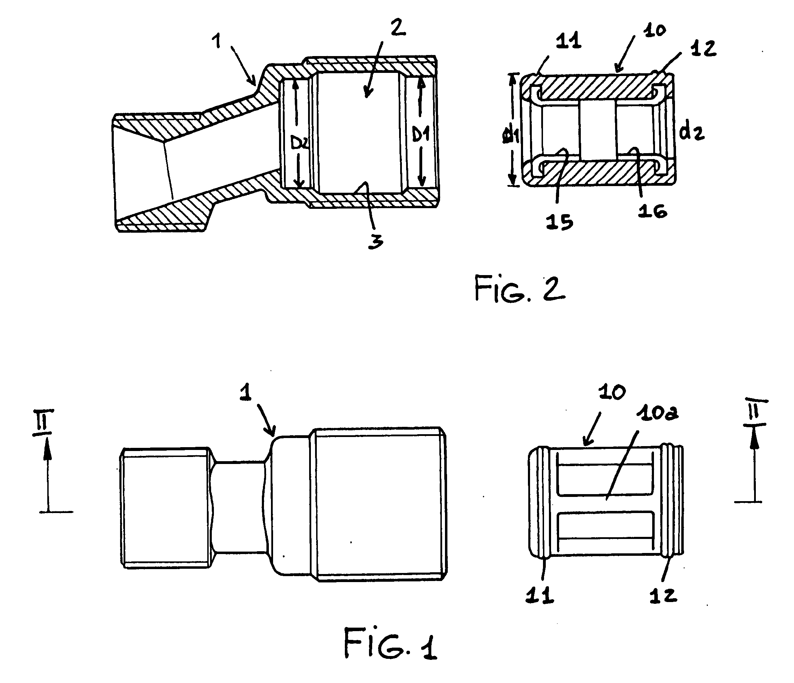

With reference to the number references of the above mentioned figures and, in particular, to figures 1 to 5, the anti-noise device for faucets in general according to the present invention comprises a device body which is advantageously constituted by a cam or eccentric element 1 defining in its inside a cavity or hollow 2 interposed on a flow line of a fluid to be delivered.

In this connection it should be pointed out that, optionally, said cavity could also be directly formed inside the faucet.

Inside said cavity is housed a silencer tubular element 10 which is advantageously made of a rubber material and defining, at each of its two axial end portions, one or more circular crown lips 11 and 12 affecting, respectively, the inner end portion and outer end portion.

Advantageously, said cavity or hollow 2 defines, in its inside, an outlet 3.

Thus, the central region of said cavity is not involved by the contact with the ribs 10a of the silencer tubular element 10, thereby facilitating the engaging in said cavity of said silencer tubular element 10.

In particular, for facilitating said engagement, a reduced interference is defined between the inner end portion of the silencer tubular element and the outer end portion of said cavity.

More specifically, said cavity 2 has an outer diameter D1, that is the diameter of the portion toward the faucet coupling, which has a value greater than the diameter D2 of the cavity inner end portion.

Likewise, the tubular element has an inner diameter d1 less than the outer diameter d2.

Thus, the silencer tubular element will provide a tightness relationship of a double strength, thereby the device can be engaged without any friction, or with a very low friction, so as to prevent any unnecessarily forced engagement in said cavity.

In addition, the above disclosed embodiment provides a larger radial flexibility of the silencer at the central region, since the ribs are not fully contacting therein the inner surface of the cavity, thereby providing a larger coupling efficiency.

Inside said tubular element are provided an inner bush element 15 and an outer bush element 16 which, in the embodiments of figures 1 and 2, are arranged opposite to one another.

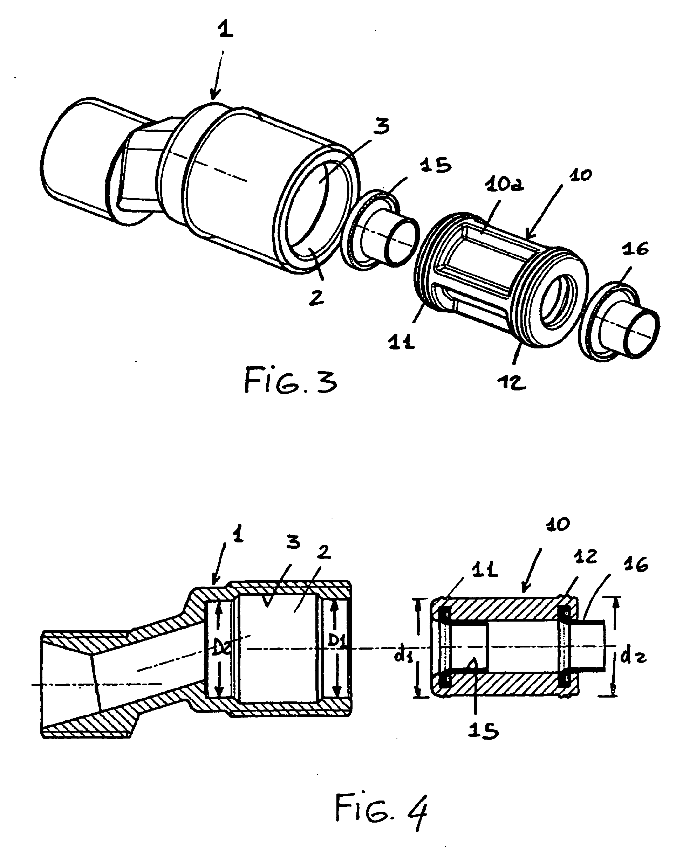

As shown in figures 3 and 4, the outer bush element 16 is turned.

Thus, it is possible to improve the water flow guide at the inlet of the faucet, thereby further improving the radial flexibility of the silencer tubular element, which will be a resilient silencer tubular element.

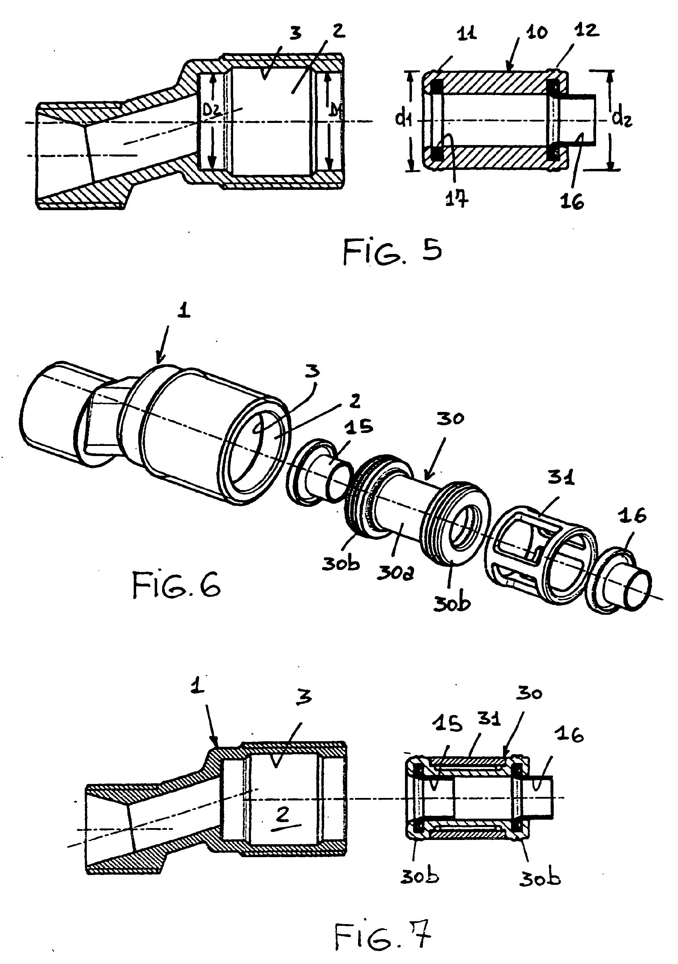

A further improvement is achieved by the embodiment shown in figure 5, where the inner bush element 15 is replaced by an inner washer element 17.

This embodiment, as stated, further improves the flexibility of the resilient element.

The embodiment shown in figures 6 to 12 further increases the elastic properties of the silencer tubular element, since is herein provided a silencer tubular element, generally indicated by the reference number 30, which is devoid of longitudinal ribs and may have a differentiated region flexibility, by diameter, thickness variation or other methods.

Even in this case, the cavity, also indicated by the reference number 2, may have different diameters, and an unloaded central region, or it can be of a conventional type.

The tubular element 30 comprises a cylindric central portion 30a coupled to suitably enlarged end flanges 30b.

To provide a sufficient stiffness for the engagement operation, is herein provided a small cage 31 which does not provide a tightness function, but is exclusively used to facilitate the assembling, by preventing disalignments from occurring and allowing the silencer to be always properly arranged.

The mentioned cage element, which in the drawings has been shown as including four spokes, can obviously have any desired number of spokes and any desired cross-section.

The tightness is essentially a radial tightness, and are herein provided bush elements 15 and 16 which are preferably mounted as shown in figures 6, 7 and 8.

Since the system cannot be disaligned in its assembling operation, and cannot be misdisplaced during its operation, the inner bush element 15, even in this case, can be replaced, without any problems, by an inner washer elements, also indicated by the reference number 17.

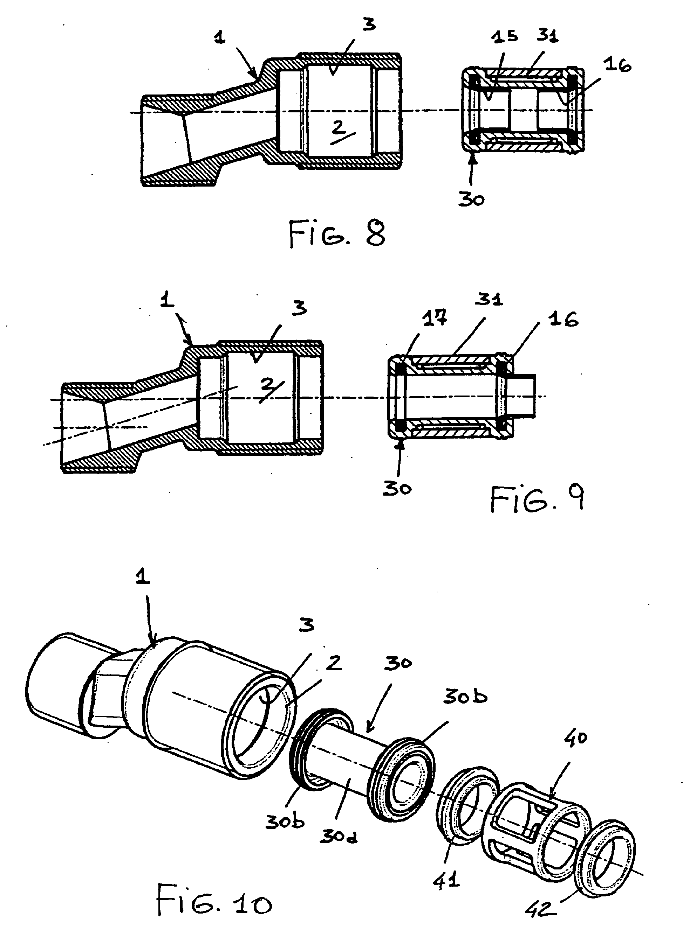

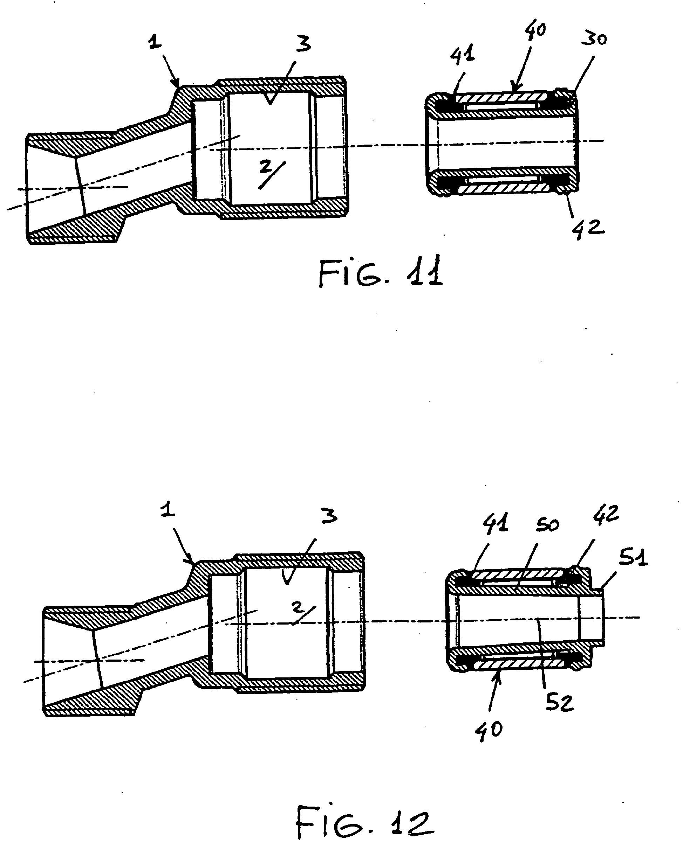

In the embodiment shown in figures 10 and 11, a smooth silencer smooth tubular element 30 is provided, which is devoid of longitudinal ribs, to provide a greater flexibility, and can be provided of differentiated stiffness regions, by diameter, thickness, varying methods and so on.

The tightness of sealing herein obtained is essential of a radial or a combined nature, and is herein provided a central small cage, indicated by the reference number 40, which does not provide an axial pushing function, but only a supporting function for properly supporting the two stiffening bush elements 41 and 42 providing a desired stiffness at the radial tightness region.

The cage, in particular, could include in a single piece a single stiffening bush element or both said stiffening bush elements.

As shown in figure 12, the central smooth body 50 may include an extension or lug 51 provided for engagement in the faucet body.

The cross-section of the duct 52 can be substantially tapering in a longitudinal direction, and optionally can be an ovoidal cross-section, preferably decreasing in the flow direction and optionally with differentiated stiffen regions, achieved by diameter, thickness varying methods, or by inner ribs or other methods.

From the above disclosure it should be apparent that the invention fully achieves the intended aim and objects.

In particular, the fact is to be pointed out that the invention has provided an anti-noise device for faucets in general allowing to greatly simplify all the assembling operation thereof, without generating undesired efforts which could offset the silencer tubular element, with consequent operation malfunctions.

The invention, as disclosed, is susceptible to several modifications and variations within the scope of the claims.

## Claims

1. An anti-noise device for faucets in general, said anti-noise device comprising a silencer tubular element (10, 30, 50) and a body (1) to be arranged on a flow line of a fluid and defining a cavity (21) for tightly housing therein said silencer tubular element (10, 30, 50) defining an axial passage for said flow line, **characterized in that** said cavity (2) has a faucet coupling cavity outer end portion having an inner diameter (D1) greater than an inner diameter (D2) of a cavity inner end portion, and that said silencer tubular element (10) has a tubular element inner end portion and a tubular element outer end portion, said tubular element inner end portion having an outer diameter (d1) less than an outer diameter (d2) of said tubular element outer end portion thereof, such that said device provides a reduced interference between the tubular element inner end portion of said silencer tubular element and the faucet coupling cavity outer end portion of said cavity, to facilitate the engagement in said cavity of said silencer tubular element.

2. An anti-noise device, according to claim 1, **characterized in that** said silencer tubular element (10) is made of a rubber material and defines, at each of said inner and outer portions thereof, one or more circular crown lips (11, 12).

3. An anti-noise device, according to claim 1, **characterized in that** said tubular element (10) has a plurality of outer longitudinal ribs (10a) which, with said tubular element (10) housed in said cavity / (2) do not contact an inner surface of a central region (3) of said cavity (2).

4. An anti-noise device, according to claim 3, **characterized in that** said tubular element supports therewithin an inner bush or washer element (15) and an outer bush element (16), said bush elements having arranged opposite to one another.

5. An anti-noise device, according to claim 1, **characterized in that** said silencer tubular element is a silencer smooth tubular element (30) comprising a cylindric central portion (30a, 50), coupled to enlarged end flanges (30b), said cylindric central portion having differentiated flexibility and hardness portions and housing a spoked supporting and stiffening cage (31).

6. An anti-noise device, according to claim 5, **characterized in that** said cage (31) includes, in a single piece, either a single stiffening bush element or two stiffening bush elements (41, 40).

7. An anti-noise device, according to claim 5, **characterized in that** said cylindric central portion (50) of said silencer tubular element (30) comprises a tapering duct (52) which is tapering in the direction of the fluid flow.

8. An anti-noise device, according to claim 7, **characterized in that** said tapering duct (52) has an ovoidal cross-section.

9. A device, according to claim 7, **characterized in that** said tapering duct (52) has a cross-section decreasing in the flow direction.

## Patentansprüche

1. Schalldämpfungsvorrichtung für Hähne im Allgemeinen, wobei die Schalldämpfungsvorrichtung umfasst:
ein Schalldämpfer-Rohrelement (10, 30, 50) und einen Körper (1), der auf einer Strömungslinie eines Fluids anzuordnen ist und einen Hohlraum (2) zum enganliegenden Aufnehmen des Schalldämpfer-Rohrelements (10, 30, 50) darin aufweist, welches einen axialen Durchgang für die Strömungslinie definiert, **dadurch gekennzeichnet, dass** der Hohlraum (2) einen äußeren Hahnanschlusshohlraumendabschnitt mit einem Innendurchmesser (D1), der größer als ein Innendurchmesser (D2) eines inneren Hohlraumendabschnitts ist, aufweist, und dass das Schalldämpfer-Rohrelement (10) einen inneren Rohrelementendabschnitt und einen äußeren Rohrelementendabschnitt aufweist, wobei der innere Rohrelementendabschnitt einen Außendurchmesser (d1), der kleiner als ein Außendurchmesser (d2) des äußeren Rohrelementendabschnitts davon ist, aufweist, derart, dass die Vorrichtung ein reduziertes Übermaß zwischen dem inneren Rohrelementendabschnitt des Schalldämpfer-Rohrelements und dem äußeren Hahnanschlusshohlraumendabschnitt vorsieht, um das Einführen des Schalldämpfer-Rohrelements in den Hohlraum zu erleichtern.

2. Schalldämpfungsvorrichtung nach Anspruch 1, **dadurch gekennzeichnet, dass** das Schalldämpfer-Rohrelement (10) aus einem Gummimaterial hergestellt ist und sowohl an seinem inneren als auch an seinem äußeren Abschnitt eine oder mehrere kreisförmige Kronenlippen (11, 12) definiert.

3. Schalldämpfungselement nach Anspruch 1, **dadurch gekennzeichnet, dass** das Rohrelement (10) eine Vielzahl von äußeren Längsrippen (10a) aufweist, welche, wenn das Rohrelement (10) in dem Hohlraum (2) aufgenommen ist, eine innere Oberfläche eines mittigen Bereichs (3) des Hohlraums (2) nicht berühren.

4. Schalldämpfungselement nach Anspruch 3, **dadurch gekennzeichnet, dass** das Rohrelement darin ein inneres Buchsen- oder Distanzscheibenelement (15) und ein äußeres Buchsenelement (16) trägt, wobei die Buchsenelemente einander entgegengesetzt angeordnet sind.

5. Schalldämpfungselement nach Anspruch 1, **dadurch gekennzeichnet, dass** das Schalldämpfer-Rohrelement ein glattes Schalldämpfer-Rohrelement (30) ist, welches einen zylindrischen mittigen Abschnitt (30a, 50) umfasst, der mit vergrößerten Endflanschen (30b) verbunden ist, wobei der zylindrische mittige Abschnitt Abschnitte mit unterschiedlicher Flexibilität und Härte aufweist und einen mit Speichen versehenen Stütz- und Versteifungskäfig (31) aufnimmt.

6. Schalldämpfungsvorrichtung nach Anspruch 5, **dadurch gekennzeichnet, dass** der Käfig (31) in einem einzigen Stück entweder ein einziges Versteifungsbuchsenelement oder zwei Versteifungsbuchsenelemente (41, 40) umfasst.

7. Schalldämpfungsvorrichtung nach Anspruch 5, **dadurch gekennzeichnet, dass** der zylindrische mittige Abschnitt (50) des Schalldämpfer-Rohrelements (30) einen sich verjüngenden Kanal (52) umfasst, der sich in Richtung des Fluidstroms verjüngt.

8. Schalldämpfungsvorrichtung nach Anspruch 7, **dadurch gekennzeichnet, dass** der sich verjüngende Kanal (52) einen eiförmigen Querschnitt aufweist.

9. Schalldämpfungsvorrichtung nach Anspruch 7, **dadurch gekennzeichnet, dass** der sich verjüngende Kanal (52) einen Querschnitt aufweist, der in der Strömungsrichtung kleiner wird.

## Revendications

1. Dispositif anti bruit pour robinets, en général, ledit dispositif antibruit comprenant un élément tubulaire silencieux (10, 30, 50) et un corps (1) devant être agencé sur une conduite d'écoulement d'un fluide et définissant une cavité (2) permettant d'abriter hermétiquement, à l'intérieur, ledit élément tubulaire silencieux (10, 30, 50) définissant un passage axial pour ladite conduite d'écoulement, **caractérisé en ce que** ladite cavité (2) possède une partie d'extrémité externe de la cavité de raccordement du robinet présentant un diamètre interne (D1) supérieur à un diamètre interne (D2) d'une partie d'extrémité interne de la cavité, et **en ce que** ledit élément tubulaire silencieux (10) possède une partie d'extrémité interne d'élément tubulaire et une partie d'extrémité externe d'élément tubulaire, ladite partie d'extrémité interne d'élément tubulaire présentant un diamètre externe (d1) inférieur à un diamètre externe (d2) de ladite partie d'extrémité externe d'élément tubulaire, de telle sorte que ledit dispositif fournit une interférence réduite entre la partie d'extrémité interne d'élément tubulaire dudit élément tubulaire silencieux et la partie d'extrémité externe de la cavité de raccordement du robinet de ladite cavité, afin de faciliter l'engagement dans ladite cavité dudit élément tubulaire silencieux.

2. Dispositif antibruit selon la revendication 1, **caractérisé en ce que** ledit élément tubulaire silencieux (10) est constitué d'un matériau de caoutchouc et définit, au niveau de chacune desdites parties interne et externe, une ou plusieurs lèvres de couronne circulaires (11, 12).

3. Dispositif antibruit selon la revendication 1, **caractérisé en ce que** ledit élément tubulaire (10) possède une pluralité de nervures longitudinales extérieures (10a) qui, avec ledit élément tubulaire (10) abrité dans ladite cavité (2), n'entrent pas en contact avec une surface interne d'une région centrale (3) de ladite cavité (2).

4. Dispositif antibruit selon la revendication 3, **caractérisé en ce que** ledit élément tubulaire supporte, à l'intérieur, un élément de lavage ou de brosse intérieur (15) et un élément de brosse extérieur (16), lesdits éléments de brosse étant agencés pour se faire face.

5. Dispositif antibruit selon la revendication 1, **caractérisé en ce que** ledit élément tubulaire silencieux est un élément tubulaire lisse silencieux (30) comprenant une partie centrale cylindrique (30a, 50), raccordée à des brides d'extrémité élargies (30b), ladite partie centrale cylindrique ayant des parties souples et dures différenciées et abritant une cage de raidissement et de support à rayons (31).

6. Dispositif antibruit selon la revendication 5, **caractérisé en ce que** ladite cage (31) inclut, en une seule pièce, soit un élément de brosse raidisseur unique soit deux élément de brosse raidisseurs (41, 40).

7. Dispositif antibruit selon la revendication 5, **caractérisé en ce que** ladite partie centrale cylindrique (50) dudit élément tubulaire silencieux (30) comprend une conduite conique (52) qui s'affine dans le sens de l'écoulement du fluide.

8. Dispositif antibruit selon la revendication 7, **caractérisé en ce que** ladite conduite conique (52) présente une section ovoïde.

9. Dispositif selon la revendication 7, **caractérisé en ce que** ladite conduite conique (52) présente une section qui diminue dans le sens de l'écoulement.
